# EUROPEAN PATENT SPECIFICATION

(11) **EP 3 512 286 B1**
(45) Date of publication and mention of the grant of the patent: **24.06.2020**
(21) Application number: 19150986.8
(22) Date of filing: 09.01.2019
(51) Int. Cl.: H04W 72/04, H04W 74/08

(54) **COMMUNICATION DEVICES AND METHODS FOR HANDLING BANDWIDTH PART**
KOMMUNIKATIONSVORRICHTUNGEN UND VERFAHREN ZUR HANDHABUNG EINES BANDBREITENTEILS
DES DISPOSITIFS ET DES PROCÉDÉS POUR LA GESTION D'UNE PARTIE DE BANDE PASSANTE

(30) Priority: 10.01.2018 US 201862615942 P
(43) Date of publication of application: 17.07.2019
(73) Proprietor: HTC Corporation, Taoyuan City 330, (TW)
(72) Inventor: YE, Shiang-Rung, 330 Taoyuan City (TW)
(74) Representative: Wagner & Geyer

(56) References cited:
- "3rd Generation Partnership Project; Technical Specification Group Radio Access Network; NR; Medium Access Control (MAC) protocol specification (Release 15)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.0.0, 4 January 2018 (2018-01-04), pages 1-55, XP051392362, [retrieved on 2018-01-04]
- ERICSSON: "BWP and random access", 3GPP DRAFT; R1-1721425 BWP AND RANDOM ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20171127 - 20171201 28 November 2017 (2017-11-28), XP051363879, Retrieved from the Internet: URL:http://www.3gpp.org/ftp/Meetings%5F3GP P%5FSYNC/RAN1/Docs/ [retrieved on 2017-11-28]

## Description

### Background of the Invention

### 1. Field of the Invention

The present invention relates to communication devices and methods used in a wireless communication system, and more particularly, to communication devices and methods of handling a bandwidth part.

### 2. Description of the Prior Art

Document 3GPP TS 38.321 V15.0.0, published January 4, 2018, discloses a new radio (NR) medium access control (MAC) protocol including bandwidth part (BWP) operation. If the MAC entity receives a physical downlink (DL) control channel (PDCCH) for BWP switching while a Random Access (RA) procedure is ongoing in the MAC entity, it is up to user equipment (UE) implementation whether to switch BWP or ignore the PDCCH for BWP switching. If the MAC entity decides to perform BWP switching, the MAC entity shall stop the ongoing Random Access (RA) procedure and initiate a RA procedure on the new activated BWP. If the MAC decides to ignore the PDCCH for BWP switching, the MAC entity shall continue with the ongoing RA procedure on the active BWP.

A user equipment (UE) stops a timer of a bandwidth part (BWP), when the UE initiates (e.g., performs) a random access (RA) procedure. However, the UE cannot perform a switching of the BWP during the RA procedure because the timer has been stopped (i.e., the timer will not expire). A power of the UE may be wasted.

In addition, the UE stops the timer of the BWP, when the UE initiates the RA procedure. However, the UE starts the timer, when the UE receives a physical downlink (DL) control channel (PDCCH) indicating a DL assignment for a RA message. It is unknown how to handle the timer of the BWP, when the UE receives the PDCCH during the RA procedure.

Thus, how to handle the timer of the BWP regarding the RA procedure is an important problem to be solved.

### Summary of the Invention

The present invention therefore provides methods and related communication devices for handling a bandwidth part to solve the abovementioned problem.

The invention is defined by the independent claims. The dependent claims define advantageous embodiments.

The method includes: the communication device receiving a configuration for a timer; starting the timer in response to the configuration, when receiving a physical downlink (DL) control channel (PDCCH) indicating at least one of a first DL assignment and a switching of the BWP; initiating a random access (RA) procedure and stopping the timer; and starting the timer, when obtaining that the RA procedure is successfully performed. These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

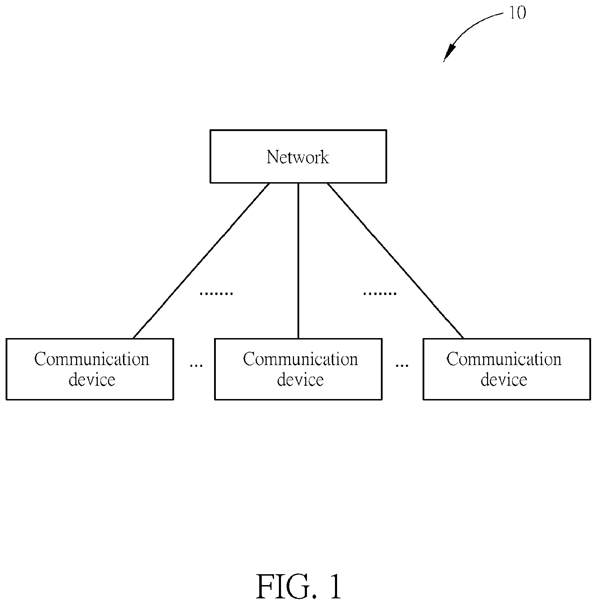

In Fig.1, the wireless communication system 10 is briefly composed of a network and a plurality of communication devices. The network and the communication device may (e.g., simultaneously) communicate with each other via one or multiple cells including a primary cell (PCell) and one or more secondary cells (SCells). The Pcell and/or the SCells may be configured with a plurality of bandwidth parts (BWPs) (e.g., 4 BWPs). At a time instant, one of the plurality of BWPs may be activated and others of the plurality of BWPs may not be activated.

Practically, the network may comprise an evolved universal terrestrial radio access (E-UTRA) including at least one evolved Node-B (eNB) which may connect to an evolved packet core (EPC) and/or fifth generation core (5GC) . The network may comprise a new radio (NR)/next generation (NextGen) network including at least one 5G BS (or called gNB) or an evolved gNB (egNB) or a sixth generation (6G) BS. The 5G/6G radio communication technology may employ orthogonal frequency-division multiplexing (OFDM) and/or non-OFDM. In general, a BS may also be used to refer any of the eNB, the gNB, the egNB and the 6G BS.

The communication device may be a user equipment (UE), a NB-IoT UE, a mobile phone, a laptop, a tablet computer, an electronic book, a portable computer system, a vehicle, or an aircraft. In addition, the network and the communication device can be seen as a transmitter or a receiver according to direction (i.e., transmission direction), e.g., for a uplink (UL), the communication device is the transmitter and the network is the receiver, and for a downlink (DL), the network is the transmitter and the communication device is the receiver.

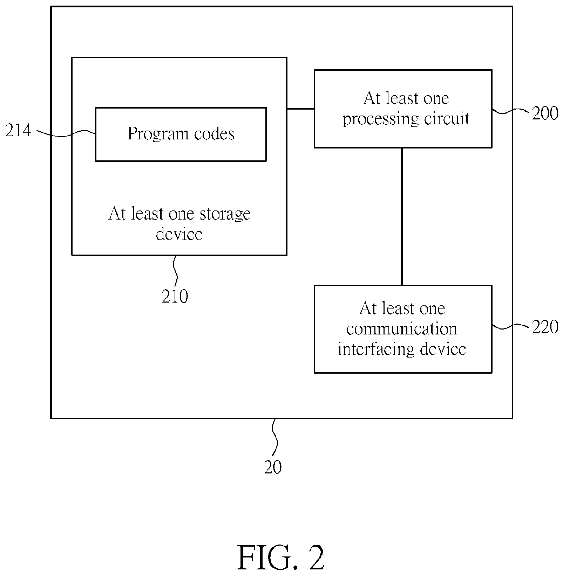

In Fig. 2, the communication device 20 may be a communication device or the network shown in Fig. 1, but is not limited herein. The communication device 20 may include at least one processing circuit 200 such as a microprocessor or Application Specific Integrated Circuit (ASIC), at least one storage device 210 and at least one communication interfacing device 220. The at least one storage device 210 may be any data storage device that may store program codes 214, accessed and executed by the at least one processing circuit 200. Examples of the at least one storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The at least one communication interfacing device 220 includes at least one transceiver and is used to transmit and receive signals (e.g., data, messages and/or packets) according to processing results of the at least one processing circuit 200.

In the following examples, a UE is used for representing the communication device in Fig. 1, to simplify the illustration of the embodiments.

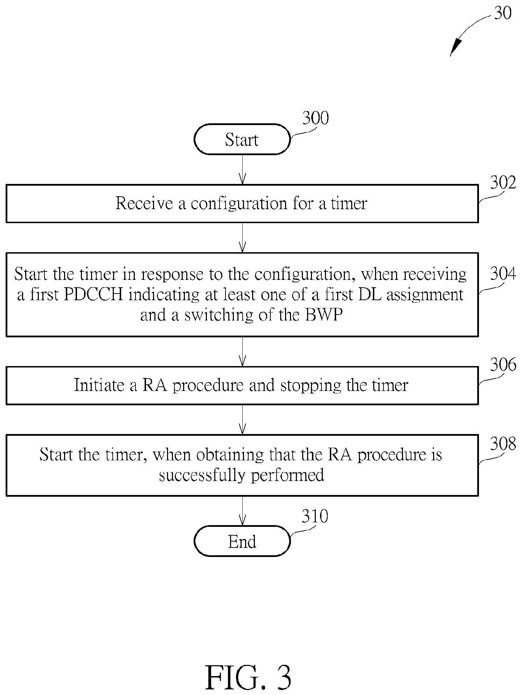

A process 30 in Fig. 3 according to an example of the present invention may be utilized in a UE, and includes the following steps:

| | |
|---|---|
| Step 300: | Start. |
| Step 302: | Receive a configuration for a timer (e.g., for a BWP). |
| Step 304: | Start the timer in response to the configuration, when receiving a first physical DL control channel (PDCCH) indicating at least one of a first DL assignment and a switching of the BWP. |
| Step 306: | Initiate a random access (RA) procedure and stopping the timer. |
| Step 308: | Start (e.g., restart) the timer, when obtaining (e.g., detecting or determining) that the RA procedure is successfully performed (e.g., completed). |
| Step 310: | End. |

According to the process 30, the UE starts (or restart) the timer, when the UE obtains that the RA procedure is successfully performed. Accordingly, the switching of the BWP may be performed when the timer expires. Thus, the problem that the power of the UE may be wasted is solved.

Realization of the process 30 is not limited to the above description.

In one example, the UE obtains (e.g., detects or determines) that the RA procedure is successfully performed, when a UE contention resolution identity (ID) in a medium access control (MAC) control element (CE) of a first RA message received by the UE is the same as (e.g., matches) a common control channel (CCCH) service data unit (SDU) in a second RA message transmitted by the UE. In one example, the first RA message is a Msg 4 of the RA procedure. In one example, the second RA message is a Msg 3 of the RA procedure.

In one example, the UE obtains that the RA procedure is successfully performed, when the first PDCCH indicates (e.g., is addressed to) a cell radio network temporary identifier (RNTI) (C-RNTI) of the UE and a first RA preamble for a beam failure recovery request is (e.g., was) transmitted by (e.g., a MAC entity of) the UE in the RA procedure. In one example, the first RA preamble is a contention free RA preamble.

In one example, the UE obtains that the RA procedure is successfully performed, when a second DL assignment for a third RA message is (e.g., was) received on the first PDCCH according to a RA-RNTI of (e.g., in) a second RA preamble, and when the third RA message obtained (e.g., received) by the UE according to the second DL assignment includes a RA preamble identifier (RAPID) corresponding to a preamble index (e.g., PREAMBLE_INDEX) of the second RA preamble. In one example, the third RA message is a Msg 2 (e.g., RA Response (RAR)) of the RA procedure. In one example, the second RA preamble is transmitted by (e.g., a MAC entity of) the UE when initiating the RA procedure. In one example, the second RA preamble is (e.g., was) not selected by (e.g., a MAC entity of) the UE in a common RA channel (RACH).

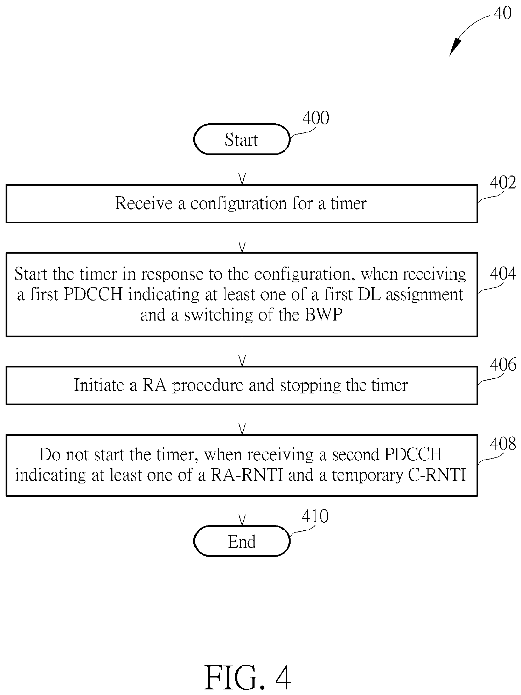

A process 40 in Fig. 4 according to an example of the present invention may be utilized in a UE, and includes the following steps:

| | |
|---|---|
| Step 400: | Start. |
| Step 402: | Receive a configuration for a timer (e.g., for the BWP). |
| Step 404: | Start the timer in response to the configuration, when receiving a first PDCCH indicating (e.g., addressed to) at least one of a first DL assignment and a switching of the BWP. |
| Step 406: | Initiate a RA procedure and stopping the timer. |
| Step 408: | Do not start (e.g., restart) the timer, when receiving a second PDCCH indicating (e.g., addressed to) at least one of a RA-radio network temporary identity (RNTI) (RA-RNTI) and a temporary cell-RNTI (temporary C-RNTI). |
| Step 410: | End. |

According to process 40, the UE does not start (or restart) the timer, when the UE receives the second PDCCH indicating the at least one of the RA-RNTI and the temporary C-RNTI. That is, even if the UE receives the second PDDCH, the UE does not start the timer because the UE is performing the RA procedure (i.e., the RA procedure is ongoing). Thus, the UE knows how to handle the timer of the BWP, when the UE receives the second PDCCH during the RA procedure.

Realization of the process 40 is not limited to the above description.

In one example, the UE starts (e.g., restart) the timer, when the UE obtains (e.g., detects) that the RA procedure is successfully performed (e.g., completed) . The examples regarding obtaining that the RA procedure is successfully performed in the process 30 may be applied to the process 40, and are not repeated herein.

Realization of the process 30 and the process 40 are not limited to the above description. The following examples may be applied to the process 30 and the process 40.

In one example, the timer includes (e.g., is) a BWP inactivity timer (e.g., bandwidthPartInactivityTimer or BWP-InactivityTimer) . The BWP inactivity timer may be a duration after which the UE switches (e.g., falls back) from the BWP to another BWP (e.g., predetermined or default BWP). That is, the UE switches from the BWP to the other BWP, when the BWP inactivity timer expires. In one example, the BWP and the other BWP are on the same DL carrier. In one example, the UE stops the timer without switching from the BWP to the other BWP, when the configuration for the timer is released (e.g., by a network from which the UE receives the configuration for the timer). In one example, the timer is associated with a DL carrier. That is, all BWPs on the same DL carrier are associated with (e.g., use) the same timer.

In one example, the BWP is a DL BWP. In one example, the switch of the BWP refers to that the UE switches from the BWP to the other BWP. In other words, the UE activates an inactive BWP (e.g., the other BWP) and deactivates an active BWP (e.g., the BWP) at the time instant.

In one example, the RA procedure is a contention based RA procedure. In one example, the RA procedure is a contention free (i.e., non-contention based) RA procedure.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned steps, description and examples. Some steps described above may not be necessary for realizing the present invention. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the processes above may be compiled into the program codes 214.

To sum up, the present invention provides a method and a communication device for handling a BWP. The UE starts the timer of the BWP, when the UE obtains that the RA procedure is successfully performed. In addition, the UE does not start the timer of the BWP, when the UE receives the second PDCCH during the RA procedure. Thus, the problem of handling the timer of the BWP regarding the RA procedure is solved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device (20) for handling a bandwidth part, BWP, comprising:
at least one storage device (210); and
at least one processing circuit (200), coupled to the at least one storage device (210), wherein the at least one storage device stores (210), and the at least one processing circuit (200) is configured to execute instructions of:
receiving (302; 402) a configuration for a timer, wherein the timer comprises a BWP inactivity timer;
starting (304; 404) the timer in response to the configuration, when receiving a first physical downlink, DL, control channel, PDCCH, indicating at least one of a first DL assignment and a switching of the BWP;
initiating (306; 406) a random access, RA, procedure and stopping the timer;
restarting (308) the timer, when obtaining that the RA procedure is successfully performed; and
obtaining that the RA procedure is successfully performed, when:
a) a user equipment, UE, contention resolution identity, ID, in a medium access control, MAC, control element, CE, of a first RA message received by the communication device (20) is the same as a common control channel, CCCH, service data unit, SDU, in a second RA message transmitted by the communication device (20);
b) the first PDCCH indicates a cell radio network temporary identifier, RNTI, C-RNTI, of the communication device (20) and a first RA preamble for a beam failure recovery request is transmitted by the communication device (20) in the RA procedure; or
c) a second DL assignment for a third RA message is received on the first PDCCH according to a RA-RNTI of a second RA preamble and the third RA message obtained by the communication device (20) according to the second DL assignment comprises a RA preamble identifier, RAPID, corresponding to a preamble index of the second RA preamble.

2. The communication device of claim 1, wherein the first RA message is a Msg 4 of the RA procedure, and the second RA message is a Msg 3 of the RA procedure;

3. The communication device of claim 1, wherein the first RA preamble is a contention free RA preamble.

4. The communication device of claim 1, wherein the third RA message is a Msg 2 of the RA procedure.

5. The communication device of claim 1, wherein the second RA preamble is transmitted by the communication device (20) when initiating the RA procedure.

6. The communication device of claim 1, wherein the second RA preamble is not selected by the communication device (20) in a common RA channel, RACH.

7. A method performed by a communication device (20) for handling a bandwidth part, BWP, comprising:
receiving (302; 402) a configuration for a timer, wherein the timer comprises a BWP inactivity timer;
starting (304; 404) the timer in response to the configuration, when receiving a first physical downlink, DL, control channel, PDCCH, indicating at least one of a first DL assignment and a switching of the BWP;
initiating (306; 406) a random access, RA, procedure and stopping the timer;
restarting (308) the timer, when obtaining that the RA procedure is successfully performed; and
obtaining that the RA procedure is successfully performed, when:
a) a user equipment, UE, contention resolution identity, ID, in a medium access control, MAC, control element, CE, of a first RA message received by the communication device (20) is the same as a common control channel, CCCH, service data unit, SDU, in a second RA message transmitted by the communication device (20);
b) the first PDCCH indicates a cell radio network temporary identifier, RNTI, C-RNTI, of the communication device (20) and a first RA preamble for a beam failure recovery request is transmitted by the communication device (20) in the RA procedure; or
c) a second DL assignment for a third RA message is received on the first PDCCH according to a RA-RNTI of a second RA preamble and the third RA message obtained by the communication device (20) according to the second DL assignment comprises a RA preamble identifier, RAPID, corresponding to a preamble index of the second RA preamble.

8. A communication device (20) for handling a bandwidth part, BWP, comprising:
at least one storage device (210); and
at least one processing circuit (200), coupled to the at least one storage device (210), wherein the at least one storage device (210) stores, and the at least one processing circuit (200) is configured to execute instructions of:
receiving (302; 402) a configuration for a timer, wherein the timer comprises a BWP inactivity timer;
starting (304; 404) the timer in response to the configuration, when receiving a first physical downlink, DL, control channel, PDCCH, indicating at least one of a DL assignment and a switching of the BWP;
initiating (306; 406) a random access, RA, procedure and stopping the timer; and
not restarting (408) the timer, when receiving a second PDCCH indicating at least one of a RA-radio network temporary identity, RNTI, RA-RNTI, and a temporary cell-RNTI, C-RNTI.

9. A method performed by a communication device (20) for handling a bandwidth part, BWP, comprising:
receiving (302; 402) a configuration for a timer, wherein the timer comprises a BWP inactivity timer;
starting (304; 404) the timer in response to the configuration, when receiving a first physical downlink, DL, control channel, PDCCH, indicating at least one of a DL assignment and a switching of the BWP;
initiating (306; 406) a random access, RA, procedure and stopping the timer; and
not restarting (408) the timer, when receiving a second PDCCH indicating at least one of a RA-radio network temporary identity, RNTI, RA-RNTI, and a temporary cell-RNTI, C-RNTI.

## Patentansprüche

1. Ein Kommunikationsgerät (20) zum Handhaben eines Bandbreitenteils (Bandwith Part bzw. BWP), aufweisend:
wenigstens eine Speichereinrichtung (210), und
wenigstens eine Verarbeitungsschaltung (200), die mit der wenigstens einen Speichereinrichtung (210) gekoppelt ist, wobei die wenigstens eine Verarbeitungsschaltung (200) konfiguriert ist zum Ausführen von durch die wenigstens eine Speichereinrichtung (210) gespeicherten Befehlen zum:
Empfangen (302; 402) einer Konfiguration für einen Timer, wobei der Timer ein BWP-Inaktivitäts-Timer ist,
Starten (304; 404) des Timers in Antwort auf die Konfiguration, wenn ein erster physikalischer Abwärtsstrecke (Downlink bzw. DL)-Steuerkanal (PDCCH) empfangen wird, der eine erste DL-Zuweisung und/oder einen Wechsel des BWP angibt,
Einleiten (306; 406) einer Zufallszugriff (Random Access bzw. RA)-Prozedur, und Stoppen des Timers,
erneutes Starten (308) des Timers, wenn festgestellt wird, dass die RA-Prozedur erfolgreich durchgeführt wird, und
Feststellen, dass die RA-Prozedur erfolgreich durchgeführt wird, wenn:
a) eine Benutzergerät (User Equipment bzw. UE)-Konkurrenzauflösungsidentität in einem MAC (Medium Access Control)-Steuerelement einer durch das Kommunikationsgerät (20) empfangenen ersten RA-Nachricht gleich einer Gemeinsamer-Steuerkanal (CCCH)-Dienstdateneinheit (Service Data Unit bzw. SDU) in einer durch das Kommunikationsgerät (20) gesendeten zweiten RA-Nachricht ist,
b) der erste PDCCH eine Zellenfunknetz-Temporärkennzeichnung (Cell Radio Network Temporary Identifier bzw. C-RNTI) des Kommunikationsgeräts (20) angibt und eine erste RA-Präambel für eine Strahlfehlerwiederherstellungsanfrage durch das Kommunikationsgeräts (20) in der RA-Prozedur gesendet wird, oder
c) eine zweite DL-Zuweisung für eine dritte RA-Nachricht auf dem ersten PDCCH in Entsprechung zu einer RA-RNTI einer zweiten RA-Präambel empfangen wird und die durch das Kommunikationsgerät (20) erhaltene dritte RA-Nachricht in Entsprechung zu der zweiten DL-Zuweisung eine RA-Präambelkennzeichnung (RA Preamble Identifier bzw. RAPID) in Entsprechung zu einem Präambelindex der zweiten RA-Präambel aufweist.

2. Kommunikationsgerät nach Anspruch 1, wobei die erste RA-Nachricht eine Msg 4 der RA-Prozedur ist und die zweite RA-Nachricht eine Msg 3 der RA-Prozedur ist.

3. Kommunikationsgerät nach Anspruch 1, wobei die erste RA-Präambel eine konkurrenzfreie RA-Präambel ist.

4. Kommunikationsgerät nach Anspruch 1, wobei die dritte RA-Nachricht eine Msg 2 der RA-Prozedur ist.

5. Kommunikationsgerät nach Anspruch 1, wobei die zweite RA-Präambel durch das Kommunikationsgerät (20) gesendet wird, wenn die RA-Prozedur eingeleitet wird.

6. Kommunikationsgerät nach Anspruch 1, wobei die zweite RA-Präambel nicht durch das Kommunikationsgerät (20) in einem gemeinsamen RA-Kanal (RACH) ausgewählt wird.

7. Ein Verfahren, das durch ein Kommunikationsgerät (20) für das Handhaben eines Bandbreitenteils (Bandwith Part bzw. BWP) durchgeführt wird, aufweisend:
Empfangen (302; 402) einer Konfiguration für einen Timer, wobei der Timer ein BWP-Inaktivitäts-Timer ist,
Starten (304; 404) des Timers in Antwort auf die Konfiguration, wenn ein erster physikalischer Abwärtsstrecke (Downlink bzw. DL)-Steuerkanal (PDCCH) empfangen wird, der eine erste DL-Zuweisung und/oder einen Wechsel des BWP angibt,
Einleiten (306; 406) einer Zufallszugriff (Random Access bzw. RA)-Prozedur, und Stoppen des Timers,
erneutes Starten (308) des Timers, wenn festgestellt wird, dass die RA-Prozedur erfolgreich durchgeführt wird, und
Feststellen, dass die RA-Prozedur erfolgreich durchgeführt wird, wenn:
a) eine Benutzergerät (User Equipment bzw. UE)-Konkurrenzauflösungsidentität in einem MAC (Medium Access Control)-Steuerelement einer durch das Kommunikationsgerät (20) empfangenen ersten RA-Nachricht gleich einer Gemeinsamer-Steuerkanal (CCCH)-Dienstdateneinheit (Service Data Unit bzw. SDU) in einer durch das Kommunikationsgerät (20) gesendeten zweiten RA-Nachricht ist,
b) der erste PDCCH eine Zellenfunknetz-Temporärkennzeichnung (Cell Radio Network Temporary Identifier bzw. C-RNTI) des Kommunikationsgeräts (20) angibt und eine erste RA-Präambel für eine Strahlfehlerwiederherstellungsanfrage durch das Kommunikationsgeräts (20) in der RA-Prozedur gesendet wird, oder
c) eine zweite DL-Zuweisung für eine dritte RA-Nachricht auf dem ersten PDCCH in Entsprechung zu einer RA-RNTI einer zweiten RA-Präambel empfangen wird und die durch das Kommunikationsgerät (20) erhaltene dritte RA-Nachricht in Entsprechung zu der zweiten DL-Zuweisung eine RA-Präambelkennzeichnung (RA Preamble Identifier bzw. RAPID) in Entsprechung zu einem Präambelindex der zweiten RA-Präambel aufweist.

8. Kommunikationsgerät (20) für das Handhaben eines Bandbreitenteils (Bandwith Part bzw. BWP), aufweisend:
wenigstens eine Speichereinrichtung (210), und
wenigstens eine Verarbeitungsschaltung (200), die mit der wenigstens einen Speichereinrichtung (210) gekoppelt ist, wobei die wenigstens eine Verarbeitungsschaltung (200) konfiguriert ist zum Ausführen von durch die wenigstens eine Speichereinrichtung (210) gespeicherten Befehlen zum:
Empfangen (302; 402) einer Konfiguration für einen Timer, wobei der Timer ein BWP-Inaktivitäts-Timer ist,
Starten (304; 404) des Timers in Antwort auf die Konfiguration, wenn ein erster physikalischer Abwärtsstrecke (Downlink bzw. DL)-Steuerkanal (PDCCH) empfangen wird, der eine DL-Zuweisung und/oder einen Wechsel des BWP angibt,
Einleiten (306; 406) einer Zufallszugriff (Random Access bzw. RA)-Prozedur, und Stoppen des Timers, und
nicht erneutes Starten (408) des Timers, wenn ein zweiter PDCCH empfangen wird, der eine RA-Funknetztemporäridentität (RA-Radio Network Temporary Identity bzw. RA-RNTI) und eine temporäre Zellen-RNTI (C-RNTI) angibt.

9. Ein Verfahren, das durch ein Kommunikationsgerät (20) durchgeführt wird für das Handhaben eines Bandbreitenteils (Bandwith Part bzw. BWP), aufweisend:
Empfangen (302; 402) einer Konfiguration für einen Timer, wobei der Timer ein BWP-Inaktivitäts-Timer ist,
Starten (304; 404) des Timers in Antwort auf die Konfiguration, wenn ein erster physikalischer Abwärtsstrecke (Downlink bzw. DL)-Steuerkanal (PDCCH) empfangen wird, der eine DL-Zuweisung und/oder einen Wechsel des BWP angibt,
Einleiten (306; 406) einer Zufallszugriff (Random Access bzw. RA)-Prozedur, und Stoppen des Timers, und
nicht erneutes Starten (408) des Timers, wenn ein zweiter PDCCH empfangen wird, der eine RA-Funknetztemporäridentität (RA-Radio Network Temporary Identity bzw. RA-RNTI) und eine temporäre Zellen-RNTI (C-RNTI) angibt.

## Revendications

1. Dispositif de communication (20) destiné à la gestion d'une partie de bande passante, BWP, comprenant :
au moins un dispositif de stockage (210) ; et
au moins un circuit de traitement (200), couplé audit au moins un dispositif de stockage (210), dans lequel ledit au moins un dispositif de stockage (210) stocke, et ledit au moins un circuit de traitement (200) est configuré pour exécuter, des instructions de :
réception (302 ; 402) d'une configuration pour un minuteur, dans lequel le minuteur comprend un minuteur d'inactivité de BWP ;
démarrage (304 ; 404) du minuteur en réponse à la configuration, lors de la réception d'un premier canal de commande en liaison descendante, DL, physique, PDDCH, indiquant au moins une première attribution de DL et une commutation de la BWP ;
déclenchement (306 ; 406) d'une procédure d'accès direct, RA, et l'arrêt du minuteur ;
redémarrage (308) du minuteur, quand l'obtention que la procédure de RA est mise en œuvre avec succès ; et
obtention que la procédure de RA est mise en œuvre avec succès, quand :
a) une identité de résolution de conflit, ID, d'un équipement utilisateur, UE, dans un élément de commande, CE, de commande d'accès au support, MAC, d'un premier message de RA reçu par le dispositif de communication (20) est la même que celle d'une unité de données de service, SDU, de canal de commande commun, CCCH, dans un deuxième message de RA transmis par le dispositif de communication (20) ;
b) le premier PDCCH indique un identifiant temporaire de réseau radio, RNTI, de cellule, C-RNTI, du dispositif de communication (20) et un premier préambule de RA pour une requête de recouvrement d'un échec de faisceau est transmis par le dispositif de communication (20) dans la procédure de RA ; ou
c) une deuxième attribution de DL pour un troisième message de RA est reçu sur le premier PDCCH selon un RA-RNTI d'un deuxième préambule de RA et le troisième message de RA obtenu par le dispositif de communication (20) selon la deuxième attribution de DL comprend un identifiant de préambule de RA, RAPID, correspondant à un index de préambule du deuxième préambule de RA.

2. Dispositif de communication selon la revendication 1, dans lequel le premier message de RA est un Msg 4 de la procédure de RA, et le deuxième message de RA est un Msg 3 de la procédure de RA.

3. Dispositif de communication selon la revendication 1, dans lequel le premier préambule de RA est un préambule de RA sans conflit.

4. Dispositif de communication selon la revendication 1, dans lequel le troisième message de RA est un Msg 2 de la procédure de RA.

5. Dispositif de communication selon la revendication 1, dans lequel le deuxième préambule de RA est transmis par le dispositif de communication (20) lors du déclenchement de la procédure de RA.

6. Dispositif de communication selon la revendication 1, dans lequel le deuxième préambule de RA n'est pas sélectionné par le dispositif de communication (20) dans un canal de RA commun, RACH.

7. Procédé mis en œuvre par un dispositif de communication (20) destiné à la gestion d'une partie de bande passante, BWP, comprenant les étapes suivantes :
la réception (302 ; 402) d'une configuration pour un minuteur, dans lequel le minuteur comprend un minuteur d'inactivité de BWP ;
le démarrage (304 ; 404) du minuteur en réponse à la configuration, lors de la réception d'un premier canal de commande en liaison descendante, DL, physique, PDDCH, indiquant au moins une première attribution de DL et une commutation de la BWP ;
le déclenchement (306 ; 406) d'une procédure d'accès direct, RA, et l'arrêt du minuteur ;
le redémarrage (308) du minuteur, quand l'obtention que la procédure de RA est mise en œuvre avec succès ; et
l'obtention que la procédure de RA est mise en œuvre avec succès, quand :
a) une identité de résolution de conflit, ID, d'un équipement utilisateur, UE, dans un élément de commande, CE, de commande d'accès au support, MAC, d'un premier message de RA reçu par le dispositif de communication (20) est la même que celle d'une unité de données de service, SDU, de canal de commande commun, CCCH, dans un deuxième message de RA transmis par le dispositif de communication (20) ;
b) quand le premier PDCCH indique un identifiant temporaire de réseau radio de cellule, RNTI, C-RNTI, du dispositif de communication (20) et un premier préambule de RA pour une requête de recouvrement d'un échec de faisceau est transmis par le dispositif de communication (20) dans la procédure de RA ; ou
c) une deuxième attribution de DL pour un troisième message de RA est reçu sur le premier PDCCH selon un RA-RNTI d'un deuxième préambule de RA et le troisième message de RA obtenu par le dispositif de communication (20) selon la deuxième attribution de DL comprend un identifiant de préambule de RA, RAPID, correspondant à un index de préambule du deuxième préambule de RA.

8. Dispositif de communication (20) destiné à la gestion d'une partie de bande passante, BWP, comprenant :
au moins un dispositif de stockage (210) ; et
au moins un circuit de traitement (200), couplé audit au moins un dispositif de stockage (210), dans lequel ledit au moins un dispositif de stockage (210) stocke, et ledit au moins un circuit de traitement (200) est configuré pour exécuter, des instructions de :
réception (302 ; 402) d'une configuration pour un minuteur, dans lequel le minuteur comprend un minuteur d'inactivité de BWP ;
démarrage (304 ; 404) du minuteur en réponse à la configuration, lors de la réception d'un premier canal de commande en liaison descendante, DL, physique, PDDCH, indiquant au moins une première attribution de DL et une commutation de la BWP ;
déclenchement (306 ; 406) d'une procédure d'accès direct, RA, et l'arrêt du minuteur ; et
non-redémarrage (408) du minuteur, lors de la réception d'un deuxième PDCCH indiquant au moins une identité temporaire de réseau radio, RNTI, à RA, RA-RNTI, et une RNTI temporaire de cellule, C-RNTI.

9. Procédé mis en œuvre par un dispositif de communication (20) destiné à la gestion d'une partie de bande passante, BWP, comprenant les étapes suivantes :
la réception (302 ; 402) d'une configuration pour un minuteur, dans lequel le minuteur comprend un minuteur d'inactivité de BWP ;
le démarrage (304 ; 404) du minuteur en réponse à la configuration, lors de la réception d'un premier canal de commande en liaison descendante, DL, physique, PDDCH, indiquant au moins une première attribution de DL et une commutation de la BWP ;
le déclenchement (306 ; 406) d'une procédure d'accès direct, RA, et l'arrêt du minuteur ; et
le non-redémarrage (408) du minuteur, lors de la réception d'un deuxième PDCCH indiquant au moins une identité temporaire de réseau radio, RNTI, à RA, RA-RNTI, et une RNTI temporaire de cellule, C-RNTI.
